# EUROPEAN PATENT APPLICATION

(11) **EP 1 114 799 A1**
(43) Date of publication of application: **11.07.2001**
(21) Application number: 00306722.0
(22) Date of filing: 07.08.2000
(51) Int. Cl.: C03B 19/12, C03B 19/14, B01J 3/03, C23C 16/44, F27D 23/00

(54) **Process for heat treatment of a shaped article with gaseous reactants**

(30) Priority: 05.01.2000 US 478261
(71) Applicant: LUCENT TECHNOLOGIES INC., Murray Hill, New Jersey 07974-0636 (US)
(72) Inventor: Mixon, David A., Port Murray, New Jersey 07865 (US); Monberg, Eric M., Princeton, New Jersey 08540 (US); Trevor, Dennis M., Clinton, New Jersey 08809 (US)
(74) Representative: Williams, David John

(57) **Abstract**

The invention provides a process capable of heating sol-gel tubes used in the manufacture of glass optical fibre preforms, or other bodies (11,27) in a manner that both limits the amount of undesirable condensation on cooler surfaces and also promotes heating and treatment with gaseous reactants in a uniform manner. In one embodiment, the process involves the steps of providing a furnace comprising a tubular muffle (10,29) having an opening at one end; placing tubes or other bodies (11,27) into the muffle through the opening; placing within the muffle, just inside the muffle opening, a cylindrical heat and gas shield (12,23), e.g., a plug; sealing the muffle opening with a door (13,20); heating the tubes; and treating the tubes by directing the gases (15,26) through a feed hole (14,21,24,25) located in the door or elsewhere in the muffle. The heat-gas shield controls the amount of heat reaching the door, thereby maintaining the integrity of the o-ring (16) door seal. It is also possible in other embodiments (Fig.2) for the shield to control the extent to which both process gases and condensable materials driven from the tubes are able to back diffuse toward the muffle door, thereby reducing or avoiding condensation of the materials on the door as well as undesirable reactions between the process gases and the o-ring seal of the door.

## Description

### BACKGROUND OF THE INVENTION

### Field of the Invention

The invention relates to heat treatment of various bodies, in particular heat treatment of sol-gel silica overcladding tubes used to make optical fiber preforms.

### Discussion of the Related Art

Optical fiber is produced from a glass preform. The preform is generally arranged vertically in a draw tower such that a portion of the preform is lowered into a furnace region. The portion of the preform placed into the furnace region begins to soften, and the lower end of the preform forms what is known as the neck-down region, where glass flows from the original cross-sectional area of the preform to the desired cross-sectional area of the fiber. From the lower tip of this neck-down region, the optical fiber is drawn.

Optical transmission fiber typically contains a high-purity silica glass core optionally doped with a refractive index-raising element such as germanium, an inner cladding of high-purity silica glass optionally doped with a refractive index-lowering element such as fluorine, and an outer cladding of doped or undoped silica glass. In some manufacturing processes, the preforms for making such fiber are fabricated by forming an overcladding tube for the outer cladding, and separately forming a rod containing the core material and inner cladding material. The core/inner cladding are fabricated by any of a variety of vapor deposition methods known to those skilled in the art, including vapor axial deposition (VAD), outside vapor deposition (OVD), and modified chemical vapor deposition (MCVD). MCVD is discussed in U.S. Patent Nos. 4,217,027; 4,262,035; and 4,909,816, the disclosures of which are hereby incorporated by reference. MCVD involves passing a high-purity gas, e.g., a mixture of gases containing silicon and germanium, through the interior of a silica tube (known as the substrate tube) while heating the outside of the tube with a traversing oxy-hydrogen torch. In the heated area of the tube, a gas phase reaction occurs that deposits particles on the tube wall. This deposit, which forms ahead of the torch, is sintered as the torch passes over it. The process is repeated in successive passes until the requisite quantity of silica and/or germanium-doped silica is deposited. Once deposition is complete, the body is heated to collapse the substrate tube and obtain a consolidated core rod in which the substrate tube constitutes the outer portion of the inner cladding material. To obtain a finished preform, the overcladding tube is typically placed over the core rod, and the components are heated and collapsed into a solid, consolidated preform, as discussed in U.S. Patent No. 4,775,401, the disclosure of which is hereby incorporated by reference.

Forming a fiber preform using such a process therefore requires both a substrate tube and an overcladding tube. Previously, both types of tubes were formed from fused quartz or by soot methods, i.e., depositing glass on a mandrel by directing at the mandrel glass particles formed by flame hydrolysis of silicon tetrachloride. Both methods were energy intensive and costly, however, and alternatives were sought.

Because the outer cladding of a fiber is distant from transmitted light, the overcladding glass does not have to meet the optical performance specifications to which the core and the inner cladding must conform. For this reason, efforts to both ease and speed manufacture of fiber preforms focused on methods of making overcladding tubes. One area of such efforts is the use of a sol-gel casting process.

U.S. Patent No. 5,240,488 (the '488 patent), the disclosure of which is hereby incorporated by reference, discloses a sol-gel casting process capable of producing crack-free overcladding preform tubes of a kilogram or larger. In the process of the '488 patent, a colloidal silicon dispersion, e.g., fumed silica, is obtained. To maintain adequate stability of the dispersion and prevent agglomeration, the pH is raised to a value of about 11 to about 14 by use of a base, and the dispersion is then aged. Subsequent to aging, as discussed in Col. 15, lines 39-65 of the '488 patent, a gelling agent such as methyl formate is added to the dispersion to lower the pH. Typically, once the gelling agent is added, but before gellation occurs, the mixture is pumped into a tubular mold containing a central mandrel, and the gel is aged in the mold for 1 to 24 hours. The mandrel is removed, and the gelled body is then extracted from the mold, typically by launching the body from the mold in water to prevent breakage. The body is then dried, fired to remove volatile organic materials and water, and then sintered to form the finished overcladding tube. The core rod is then inserted into the tube, and the assembly is collapsed into a fiber preform.

There are numerous issues involved in performing, for example, the steps of drying, firing, and sintering, since the intent is to produce a tube meeting relatively stringent physical and chemical specifications. One such issue is the particular technique for firing the tubes to remove various particles, organic materials, and water. In particular, this firing typically involves heating the tubes in a furnace as well as treating the tubes with various gaseous reactants. One concern with this firing step is the tendency of various volatile materials burned out of the bodies to condense as a tarry substance on colder surfaces within the furnace. Another concern is the need to both heat the tubes and expose them to the gaseous reactants in as uniform a manner as possible. A third concern is protecting polymeric seals from the corrosive nature of reactive process gases. Thus, improved firing techniques are continually sought.

### SUMMARY OF THE INVENTION

The invention provides a process capable of heating sol-gel tubes, or other bodies, in a manner that limits the amount of undesirable condensation on cooler surfaces, promotes heating and treatment with gaseous reactants in a uniform manner, and is able to protect polymeric seals from corrosive reactant gases. The process is particularly applicable to treatment of sol-gel tubes for preform, and optical fiber, manufacture.

In a typical furnace configuration used to heat treat long bodies such as tubes with gaseous reactants, one end of a furnace muffle typically will have a door that opens to allow the tubes to be placed inside. To prevent contamination from outside gases as well as loss of gaseous reactants, the door must have a seal - typically provided by a polymeric o-ring. This door presents two basic problems in sol-gel processes (and other processes involving similar treatment steps). First, the heat treatment involves burning out various organic materials from the tubes, and these materials have a tendency to condense upon contact with cooler surfaces. Because the muffle door is generally cooler than the rest of the furnace (since it is located at a far end outside the heated zone), these materials will tend to condense as a tarry substance on the door. The door must therefore be cleaned after each run, and, in addition, any gaseous reactants introduced through the door may be contaminated by the tarry substance. Thus, it would be desirable to keep the door hot to avoid such condensation. But, the second problem is the need to keep a good seal between the muffle opening and the muffle door. Even temperature-resistant o-rings are not capable of withstanding the temperatures used for many heat treatment processes. Applicants sought and discovered a solution to these problems.

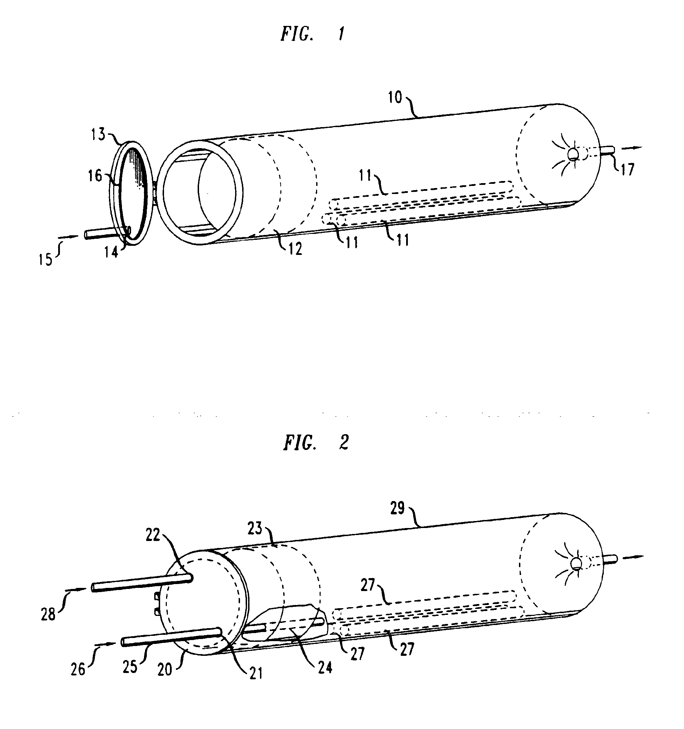

In one embodiment, reflected in Fig. 1, the process involves the steps of providing a tubular muffle 10 capable of being heated by a furnace and having an opening at one end; placing tubes or other bodies 11 into the muffle through the opening; placing within the muffle, just inside the muffle opening, a cylindrical heat and gas shield 12, e.g., a plug; sealing the muffle opening with a door 13; heating the tubes; and treating the tubes by directing a treatment gas 15 through a feed hole 14 located in the door (or elsewhere in the muffle). The heat-gas shield controls the amount of heat reaching the door, thereby maintaining the integrity of the o-ring 16. And when the gas is introduced in the region between the door and shield, the shield also controls the extent to which condensable materials driven from the tubes are able to back diffuse toward the muffle door. Specifically, when a gas is introduced into the region between the door and the shield, the gas flows at increased velocity through the gap between the shield and the inner surface of the muffle, this flow controlling the back diffusion.

In an alternative embodiment, shown in Fig. 2, the muffle door 20 contains a first feed hole 21 for process gases and a second feed hole 22 for shield gas, and the shield 23 contains a feed hole 24 aligned with the process gas feed hole 21 of the muffle door. A tube 25 is then provided from the feed hole in the muffle door through the shield to deliver the process gases 26 more directly to the tubes or bodies 27. And a shield gas 28 (which is typically a non-reactive gas such as air or nitrogen) is delivered to the region between the door and the shield. The shield gas flows around the exterior of the shield, in the narrow gap between the shield and the inner muffle surface, thereby inhibiting back diffusion, both by the process gases and condensable materials. Condensation on the door as well as undesirable interactions between processes gases and any polymeric seal are thereby reduced or avoided. In addition, particular features of the invention provide substantial uniformity of treatment - both in temperature and in exposure to gaseous reactants, this uniformity contributing to desirable properties in the treated bodies.

### BRIEF DESCRIPTION OF THE DRAWINGS

Fig. 1 shows the general features of an apparatus suitable for practicing the invention.

Fig. 2 shows a particular apparatus suitable for practicing the invention.

Fig. 3 shows a gas delivery tube that provides a radially-directed flow.

Figs. 4A and 4B show one embodiment of the invention involving use of spacer rings.

### DETAILED DESCRIPTION OF THE INVENTION

The invention relates to a process for fabricating an article, involving heat treatment of various types of bodies to remove organic or other materials and/or to treat the bodies with added gaseous reactants. The process is particularly useful with sol-gel fabrication methods. As noted above, various problems are typically encountered with conventional burn-out and treatment techniques, and the invention addresses such problems. In addition, specific features of the process of the invention provide a relatively uniform treatment of the bodies within a furnace, both in temperature and in exposure to gaseous reactants.

One embodiment of the process is illustrated by Fig. 1. A furnace is provided (not shown), along with a tubular muffle 10 capable of being heated by the furnace and having an opening at one end, through which tubes or other bodies 11 are placed into the muffle. In the case of tubes, it is useful to stack the tubes on a curved sled, e.g., a portion of a ripped tube of substantially larger diameter than the tubes but of slightly smaller diameter than the muffle. In this manner, the tubes are able to be slid into the muffle relatively easily without the problems associated with placing individual tubes into the muffle.

A door 13 with an o-ring or similar seal 16 provides a sealed enclosure within the furnace. Generally, the opposing end of the muffle contains an outlet 17 for directing gaseous products on to subsequent treatment and disposal.

In the case of silica sol-gel tubes, the components of the system, e.g., muffle 10 and door 13, are formed from silica (e.g., quartz) to avoid contamination of the tubes, to provide good corrosion and heat resistance, and to provide components with good thermal shock resistance. (Muffle configurations other than cylindrical are also possible, depending on the particular process and the particular bodies being treated.)

After the tubes or other bodies 11 are placed in the furnace, a cylindrical heat and gas shield 12, e.g., a plug, is placed into the muffle. The shield generally has a diameter to thickness ratio of about 4:1 to 1:2. In the case of a tubular muffle and cylindrical shield, the outer diameter of the shield will generally be about 95 to about 97% of the inner diameter of the muffle, such that only a small gap exists. Typically, the shield is formed as a hollow cylindrical body from a highly heat- and corrosion-resistant material such as quartz, with the interior of the shield containing a heat resistant, insulating, wool-like material. For example, in the case of silica sol-gel bodies, the shield is formed from quartz and the interior contains silica wool (and, to avoid pressure differentials, a small vent hole is typically formed on the colder face or the outer perimeter of the shield). It is also possible, and typically advantageous, to place a high temperature-resistant weave, e.g., a silica wool woven fabric, between the shield and muffle to further reduce this gap between the shield and the muffle, i.e., to act as a gasket. This gasketing typically provides improved shielding properties when a shield gas is used, as discussed below.

The shield controls, i.e., reduces, the amount of heat that reaches the door - thereby maintaining the integrity of the o-ring or other sealing mechanism (e.g., a Viton™ o-ring must be kept below 220°C). The shield also affects the back diffusion of gases evolved from the bodies, and, in some embodiments, back diffusion of introduced gases (see below). The shield is advantageously placed partially within the hot zone, i.e., the portion of the muffle being directly heated by the furnace, to improve heating uniformity and to inhibit condensable material from crusting around the periphery of the shield. (Other shapes for the shield are possible, but the shield should have substantially the same profile as the inner surface of the muffle, to provide only a small gap between the shield and the muffle.) After the shield is placed in the muffle, the muffle opening is sealed by closing the muffle door 13. It is also possible, for example, to form an integral door and shield component, and, as used herein, separate reference to the door and the shield is intended to encompass such a component.

The heat treatment is then begun. At one or more points during the heating, one or more process gases 15 are introduced through a feed hole 14 located in the door (or elsewhere in the muffle). In one embodiment of the process, reflected in Fig. 1, the process gases 15 are introduced through a feed hole 14 into a region between the muffle door 13 and the gas-heat shield 12. The gases then flow into the remainder of the muffle region through the small gap between the shield 12 and the inner surface of the muffle 10, at a substantially increased flow velocity due to the reduced volume available for the gas flow. This gas flow performs two desirable functions. First, the flow limits the extent of back diffusion of condensable materials evolved from the bodies 11. Back diffusion of condensable materials toward the cooler surface of the door 13 tends to cause condensation of the materials on the door, which is undesirable, and back diffusion of process gases tends to damage the polymeric material of the o-ring 16. Second, it is believed that because the flow occurs radially around the exterior of the shield, the gas more uniformly contacts the entire group of bodies 11, as opposed to a more central flow that may tend to primarily impact a lesser number of bodies. (Note that in this embodiment of Fig. 1, the door and any seal therein are not protected from the process gases, but are protected from exposure to high temperatures. The below embodiment, which uses a separate shield gas does protect the door and seal from reactive process gases.)

In an alternative embodiment, shown in Fig. 2, the muffle door 20 contains two feed holes 21, 22. The first feed hole 21 is used to provide one or more process gases 26 to the bodies 27. Specifically, in this embodiment, a feed tube 25 runs from the first feed hole 21, through a corresponding feed hole 24 located in the gas-heat shield, and into the region of the muffle 29 in which the bodies 27 are placed. (It is also possible for the process gases to be introduced into this region through a feed tube located elsewhere in the muffle.) A shield gas 28 is provided to a region of the muffle between the door 20 and the shield 23, through the second feed hole 22. (It is possible for the shield gas to be introduced into this region through a tube that passes through any location within the muffle.) The shield gas 28 inhibits back diffusion both of condensable materials and process gases that tend to detrimentally effect polymeric seals. Typically, the shield gas 28 is a non-reactive gas such as air or nitrogen, that is free of reactive species such as chlorine or thionyl chloride. The shield gas is selected, however, with the consideration that it will contact the bodies and thus take part in the overall treatment. In addition, particularly where a high-temperature weave is placed between the shield and the muffle, the shield gas 28 flows both around the periphery of the shield (mainly where the weave is absent) as well as through the feed hole 24 located in the shield.

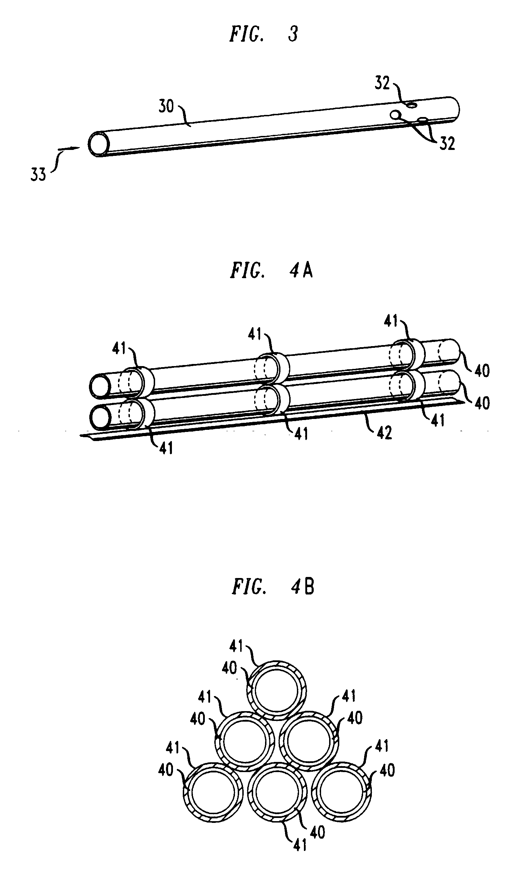

Advantageously, the process gases are delivered to the portion of the muffle containing the bodies in a radially directed manner, as opposed to delivering them in a focused flow. As shown in Fig. 3, such radial direction is attainable, for example, by using a tube 30 having a sealed end 31 and various holes 32 that deliver the gas 33 in a direction perpendicular to the axis of the tube. It is also possible for the shield to contain an integral component that provides this radial direction. For example, it is possible for the feed tube (e.g., 25) to terminate within the shield feed hole (e.g., 24) and for the gas to then pass into a radial directing component that is attached to or part of the shield.

And, as discussed above, gases involved in or generated from the process pass through an outlet - typically at the end of the muffle opposite the door. Generally, a small orifice is provided such that the gases must pass through the orifice to reach the outlet. By forcing the gases through a small hole, the orifice maintains a higher pressure inside the muffle than outside. This pressure differential ensures that gases exterior to the muffle are not drawn in, and also inhibits back diffusion of water vapor or other materials from the treatment system attached to the outlet.

The heat treatment, in the case of silica sol-gel bodies, typically follows the basic outline of U.S. Patent No. 5,240,488 (see items 11 and 12 of the Table at Cols. 11-12), although a variety of additional or alternative steps are also possible, e.g., thionyl chloride treatment such as discussed in U.S. Patent No. 5,356,447. Typical temperatures involved in treatment of silica sol-gel tubes range from 100 to 1000°C. For other bodies, suitable heat and/or gas treatment regimes are used with the process of the invention

It is generally desirable from a commercial standpoint to treat as many bodies as possible in each process run. However, particularly for bodies such as tubes, various problems can arise. For example, for a large stack of tubes, radiative heat transfer will tend to be non-uniform, treatment gases will tend to reach the tubes in a similarly non-uniform manner, and evolved products are more difficult to sweep away. And, where the bodies are not yet to full strength, e.g., unsintered ceramic bodies, the weight of the stack is carried by the bottom layer of bodies. One way of addressing these issues is the use of spacers between the bodies.

In one embodiment, useful with tubular or cylindrical bodies, spacer rings are used, as illustrated in Figs. 4A and 4B. (For bodies of other shapes, spacers of suitable shape are used.) Specifically, spacer rings 41 are placed over each tube 40, e.g., at locations of 25, 50, and 75% of the length. When stacking the tubes 40, only the spacer rings 41 are brought into contact with each other (if the pre-treated tubes are somewhat bowed, some of the spacer rings may not come into contact until heating induces relaxation of the bodies). The rings 41 provide spacing between the tubes, such that radiative heating is more uniform, treatment gases are able to reach all the tubes in a more uniform manner (particularly where the gases are introduced in a radially directed manner, as discussed above), and evolved or reacted products are more readily swept away. In addition, because the tubes 40 do not contact each other, the weight is carried by the spacer rings 41 down to the tube carrier 42 (e.g., the silica sled discussed above), which substantially reduces the mechanical strain placed on the tubes 40. For silica sol-gel bodies, the spacer rings are advantageously formed from silica, to avoid contamination.

Also, where the bodies placed into the furnace do not occupy the full volume of the muffle, it is possible for the treatment gases to flow into the stagnant volume above the bodies. In such a case, it is useful to place some sort of cover over the bodies and in contact with the gas-heat shield, such that a tube delivering process gases through the shield directs the gas underneath this cover. Such a configuration promotes a higher gas flow velocity through the bodies and improves the flow uniformity by reducing the impact of the stagnant volume. In the case of a stack of tubes, e.g., silica sol-gel tubes, it is useful to place a curved silica cover onto the stack. Such a cover is able to be formed, for example, by ripping a length of silica tubing of substantially larger diameter than the tubes being treated, in much the same way the silica sled is formed, as discussed above.

Silica sol-gel tubes treated according to the invention are typically sintered, incorporated into an optical fiber preform, and then used to form optical fiber, as discussed above.

While the process of the invention has been described primarily as to its relevance to treatment of sol-gel silica tubes, the invention is applicable to a variety of processes in which is it necessary to heat treat bodies with gaseous reactants.

Other embodiments of the invention will be apparent to those skilled in the art from consideration of the specification and practice of the invention disclosed herein.

## Claims

1. A process for fabricating an article, comprising the steps of:
providing a muffle capable of being heated by a furnace, wherein a first end of the muffle comprises an opening;
placing one or more bodies into the muffle through the muffle opening;
placing within the muffle, proximate to the muffle opening, a heat-gas shield, wherein the shield has a profile substantially identical to the profile of the inner surface of the muffle;
sealing the muffle opening with a door;
heating the bodies; and
treating the bodies by directing one or more gases through at least a first feed hole located in the door or at another location in the muffle.

2. The process of claim 1, wherein a process gas is directed through the first feed hole into the region of the muffle comprising the one or more bodies, wherein a second feed hole is located in the door, and wherein a shield gas is directed through the second feed hole into a region of the muffle between the shield and the door.

3. The process of claim 3, wherein the first feed hole is located in the door, wherein the shield comprises a feed hole corresponding to the location of the first feed hole, and wherein a tube is positioned to direct the process gas from the first feed hole through the shield feed hole into the region of the muffle comprising the one or more bodies.

4. The process of claim 2, wherein the tube or the shield provides a radially directed flow of the process gas into the region of the muffle comprising the one or more bodies.

5. The process of claim 2, wherein there exists a gap between at least a portion of the outer periphery of the shield and the inner surface of the muffle, and wherein at least a portion of the shield gas flows through this gap to the region of the muffle comprising the bodies.

6. The process of claim 1, wherein one or more process gases are directed through the first feed hole into a region of the muffle between the shield and the door.

7. The process of claim 1, wherein the muffle is tubular and the shield is cylindrical.

8. The process of claim 7, wherein the shield has a diameter to thickness ratio of about 4:1 to about 1:2.

9. The process of claim 1, wherein at least two bodies are placed in the muffle, and wherein the bodies are tubes.

10. The process of claim 9, wherein each of the tubes has two or more spacer rings placed thereon.

11. The process of claim 2, wherein the bodies occupy less than the full volume of the muffle, and wherein the process further comprises the step of disposing a cover over the bodies, the cover in contact with the shield, such that the majority of the process gases flow directly over the bodies.

12. The process of claim 1, wherein the step of placing the shield comprises placing an insulating gasket material in a portion of a gap existing between the outer periphery of the shield and the inner surface of the muffle.

13. A process for fabricating an article, comprising the steps of:
providing a tubular muffle capable of being heated by a furnace, wherein a first end of the muffle comprises an opening;
placing one or more tubular or cylindrical bodies into the muffle through the muffle opening;
placing within the muffle, proximate to the muffle opening, a cylindrical heat-gas shield;
sealing the muffle opening with a door;
heating the bodies; and
treating the bodies by directing one or more gases through at least a first feed hole located in the door or at another location in the muffle.

14. The process of claim 13, wherein the muffle, the door, and the shield are formed from silica, and wherein the bodies are silica tubes.

15. The process of claim 14, wherein the diameter of the shield is about 95 to about 97% of the inner diameter of the muffle

16. The process of claim 14 wherein the shield is a hollow silica cylinder, and wherein the interior of the cylinder comprises silica wool.

17. The process of claim 16 wherein the shield has a diameter to thickness ratio of about 4:1 to about 1:2.

18. The process of claim 14 wherein the tubes are prepared by a sol-gel process.

19. The process of claim 18, further comprising the step of sintering the treated tubes.

20. The process of claim 13, wherein a process gas is directed through the first feed hole into the region of the muffle comprising the one or more bodies, wherein a second feed hole is located in the door, and wherein a shield gas is directed through the second feed hole into a region of the muffle between the shield and the door.

21. The process of claim 20, wherein the first feed hole is located in the door, wherein the shield comprises a feed hole corresponding to the location of the first feed hole, and wherein a tube is positioned to direct the process gas from the first feed hole through the shield feed hole into the region of the muffle comprising the one or more bodies.

22. The process of claim 20, wherein the tube or the shield provides a radially directed flow of the process gas into the region of the muffle comprising the one or more bodies.

23. The process of claim 20, wherein there exists a gap between at least a portion of the shield and the inner surface of the muffle, and wherein at least a portion of the shield gas flows through this gap to the region of the muffle comprising the bodies.

24. The process of claim 13, wherein one or more process gases are directed through the first feed hole into a region of the muffle between the shield and the door.

25. The process of claim 18, wherein each of the tubes has two or more spacer rings placed thereon.

26. The process of claim 20, wherein the tubes occupy less than the full volume of the muffle, and wherein the process further comprises the step of disposing a cover over the tubes, the cover in contact with the shield, such that the majority of the process gases flow directly over the tubes.

27. The process of claim 15, wherein the step of placing the shield comprises placing an insulating gasket material in a portion of a gap existing between the outer periphery of the shield and the inner surface of the muffle.

28. The process of claim 14, wherein the step of placing the one or more bodies into the muffle comprises placing the bodies onto a curved silica sled and placing the sled into the muffle.

29. The process of claim 13, further comprising the step of providing an orifice at the end of the muffle opposite the opening, the orifice providing a pressure inside the muffle greater than the pressure outside the muffle.
